# EUROPEAN PATENT APPLICATION

(11) **EP 2 750 008 A2**
(43) Date of publication of application: **02.07.2014**
(21) Application number: 13199627.4
(22) Date of filing: 27.12.2013
(51) Int. Cl.: G06F 3/044

(54) **Touch panel**

(30) Priority: 27.12.2012 TW 101150464; 08.03.2013 TW 102204368 U; 19.06.2013 TW 102211439 U
(71) Applicant: Wintek Corporation, 42760 Taichung City (TW)
(72) Inventor: Chu, Kuan-Yu, 407 Taichung City (TW); Huang, Chun-Cheng, 630 Yunlin County (TW); Huang, Chen-Fu, 427 Taichung City (TW); Wang, Yu-Ching, 438 Taichung City (TW); Hwang, Chin-Pei, 402 Taichung City (TW); Chen, Ming-Wu, 557 Nantou County (TW); Liu, Chiu-Mei, 406 Taichung City (TW); Lin, Yan-Jun, 406 Taichung City (TW); Liu, Chia-Hung, 406 Taichung City (TW); Wang, Wen-Chun, 407 Taichung City (TW); Chang, Yu-Hung, 357 Miaoli County (TW); Tsai, Lo-Hsien, 335 Taoyuan County (TW)
(74) Representative: Becker Kurig Straus

(57) **Abstract**

A touch panel (400, 700, 800), having a peripheral region (292), includes a first substrate (211), a touch-sensing structure (420), first outer traces (431), a first ground wire (439A) and an outer device (480). The first outer trace (431) is electronically connected to the touch-sensing structure (420). The first outer traces (431) extend to a connection region (493) in the peripheral region (292). The first ground wire (439A) extends to the connection region (493), and the first ground wire (439A) has at least one interrupted section (435) in the connection region (493). The outer device (480) is electronically connected to the first ground wire (439A) and the first outer traces (431) in the connection region (493). The outer device (480) electronically connects two ends of the interrupted section (435) of the first ground wire (439A) in the connection region (493), and the two ends of the interrupted section (435) of the first ground wire (439A) are electronically connected via the outer device (480).

## Description

### Field of the Invention

This invention generally relates to a touch panel and more particularly, to a touch panel with a double routing design.

### Background of the Invention

In conventional capacitive touch panels, the composition of the sensing electrodes generally comprises transparent materials, such as indium tin oxide (ITO). Since the resistance of transparent materials is relatively high, in order to avoid signal delay resulting from the relatively high resistance of each of the sensing electrodes, outer traces, used to transmit or receive the signals, are often disposed on two ends of each of the sensing electrodes in a so-called double routing design. More particularly, since the length of the sensing electrodes increase as the size of the touch panel increases, especially in large-size touch panels, the increase in length of the sensing electrodes will intensify the signal delay effect. As a result, the double routing design is necessary for driving this kind of touch panel.

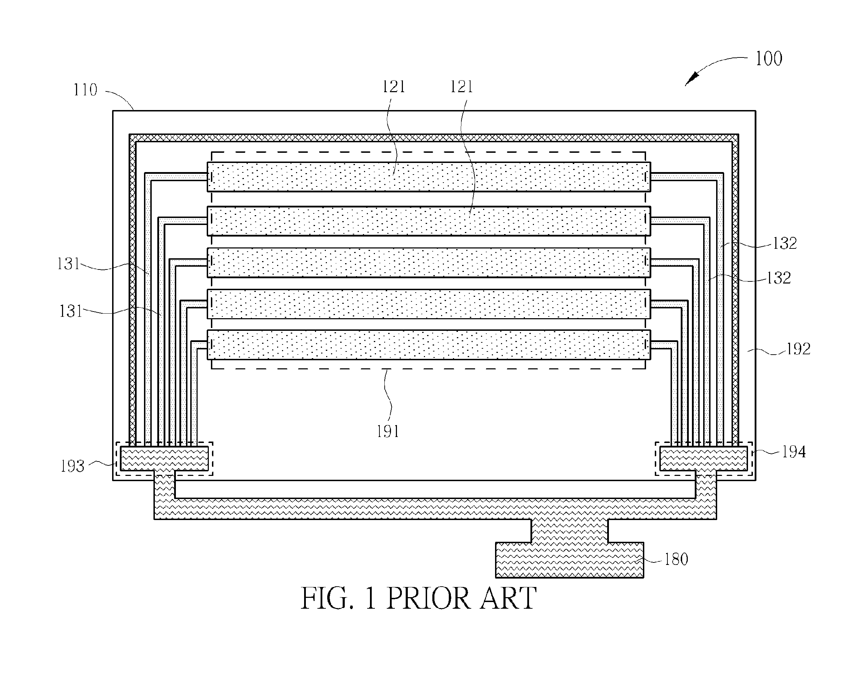

As shown in FIG. 1, in a conventional touch panel 100, a plurality of first outer traces 131 and a plurality of second outer traces 132 are disposed in a peripheral region 192 of a substrate 110. The two ends of each of the sensing electrodes 121 in the touch sensing region 191 may be electronically connected to one corresponding first outer trace 131 and one corresponding second outer trace 132 respectively. The other end of each of the first outer traces 131, which is opposite to the end connected to the sensing electrode 121, may extend to a first connection region 193. Similarly, the other end of each of the second outer traces 132, which is opposite to the end connected to the sensing electrode 121, may extend to a second connection region 194 (this design is generally regarded as a double pin design). Since the first connection region 193 and the second connection region 194 are generally disposed on two ends of the peripheral region 192, at least two bonding processes need to be carried out respectively in the first connection region 193 and the second connection region 194 when a flexible printed circuit (FPC) 180 is used. Additionally, in addition to the relatively long aligning time in the bonding process for respectively aligning the first connection region 193 and the second connection region 194, the amount of the materials used in the bonding processes, such as anisotropic conductive film (ACF), is increased as well. Furthermore, since the double pin design used in conventional touch panels requires relatively long FPC and the cost of the FPC is proportional to its area, the manufacturing cost of the FPC will thus be increased. Obviously, the drawbacks described above all negatively affect the cost for manufacturing the touch panels, and there is still a need to improve the structure of touch panels with double routing designs.

### Summary of the Invention

The present invention aims at providing a touch panel with a double routing design. In this configuration, each outer trace and each corresponding electrode can be used to form a closed conductive path so as to simplify the process for bonding an outer device and to lower the manufacturing costs. In addition, ground wires may be disposed between the outer traces so as to improve signal interference problems between different outer traces.

This is achieved by a touch panel according to claim 1 and claim 7. The dependent claims pertain to corresponding further developments and improvements.

As will be seen more clearly from the detailed description following below, the claimed touch panel has a peripheral region and includes a first substrate, a touch-sensing structure a plurality of first outer traces, a first ground wire and an outer device. The touch-sensing structure is disposed on the first substrate. The first outer traces are disposed in the peripheral region. The first outer traces are electronically connected to the touch-sensing structure, and each of the first outer traces extends to a connection region in the peripheral region. The first ground wire is disposed on the first substrate. The first ground wire extends to the connection region, and the first ground wire has at least one interrupted section in the connection region. The outer device is electronically connected to the first ground wire and the first outer traces in the connection region. The outer device electronically connects two ends of the interrupted section of the first ground wire in the connection region, and the two ends of the interrupted section of the first ground wire are electronically connected via the outer device.

These and other objectives of the present invention will no doubt become clear to those of ordinary skill in the art after reading the following detailed description of the preferred embodiment that is illustrated in the various figures and drawings.

### Brief Description of the Drawings

The invention is further illustrated by way of example, taking reference to the accompanying drawings. Thereof
FIG. 1 is a schematic diagram illustrating a conventional touch panel,
FIG. 2 is a schematic diagram illustrating a touch panel according to a first preferred embodiment of the present invention,
FIG. 3 is a schematic cross-sectional diagram taken along a line A-A' in FIG. 2,
FIG. 4 is a schematic cross-sectional diagram taken along a line B-B' in FIG. 2,
FIG. 5 is a schematic diagram illustrating a touch panel according to another preferred embodiment of the present invention,
FIG. 6 is a schematic diagram illustrating a touch panel according to another preferred embodiment of the present invention,
FIG. 7 is a schematic top view illustrating a touch panel according to another preferred embodiment of the present invention,
FIG. 8 is a schematic cross-sectional diagram illustrating a touch panel according to another preferred embodiment of the present invention,
FIG. 9 is a schematic diagram illustrating a touch panel according to another preferred embodiment of the present invention,
FIG. 10 is a schematic diagram illustrating a touch panel according to a second preferred embodiment of the present invention,
FIG. 11 is a schematic cross-sectional diagram taken along a line C-C' in FIG. 10,
FIG. 12 is a schematic diagram illustrating a touch panel according to a third preferred embodiment of the present invention,
FIG. 13 is a schematic cross-sectional diagram taken along a line D-D' in FIG. 12,
FIG. 14 is a schematic cross-sectional diagram taken along a line E-E' in FIG. 12,
FIG. 15 is a schematic diagram illustrating a touch panel according to a fourth preferred embodiment of the present invention,
FIG. 16 is a schematic cross-sectional diagram taken along a line F-F' in FIG. 15,
FIG. 17 is a schematic diagram illustrating a touch panel according to a fifth preferred embodiment of the present invention,
FIG. 18 is a schematic cross-sectional diagram taken along a line G-G' in FIG. 17,
FIG. 19 is a schematic diagram illustrating a touch panel according to a sixth preferred embodiment of the present invention,
FIG. 20 is a schematic cross-sectional diagram taken along a line H-H' in FIG. 19,
FIG. 21 is a schematic diagram illustrating a touch panel according to a seventh preferred embodiment of the present invention,
FIG. 22 is a schematic cross-sectional diagram taken along a line I-I' in FIG. 17, and
FIG. 23 is a schematic diagram illustrating an outer device according to the seventh preferred embodiment of the present invention.

### Detailed Description

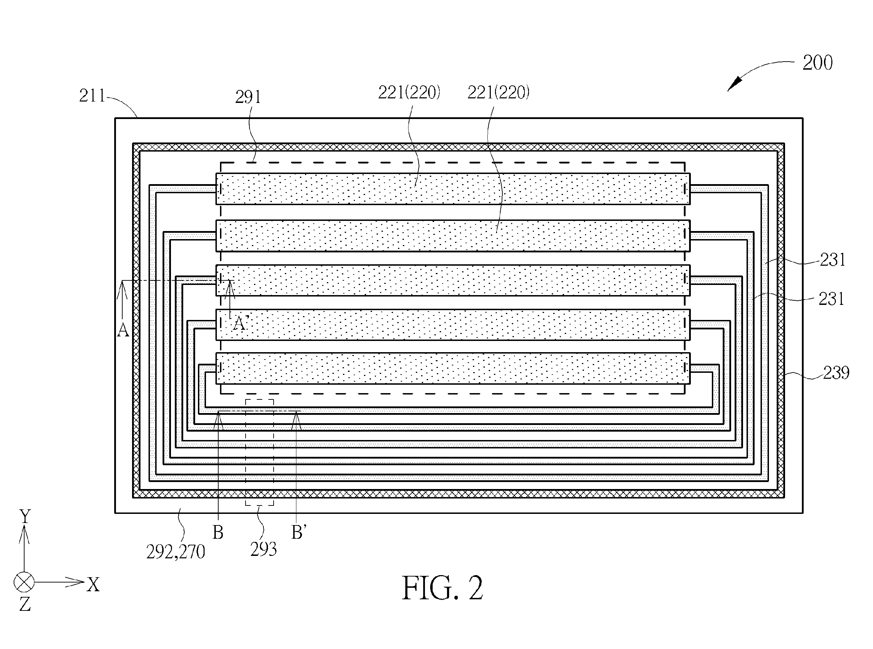

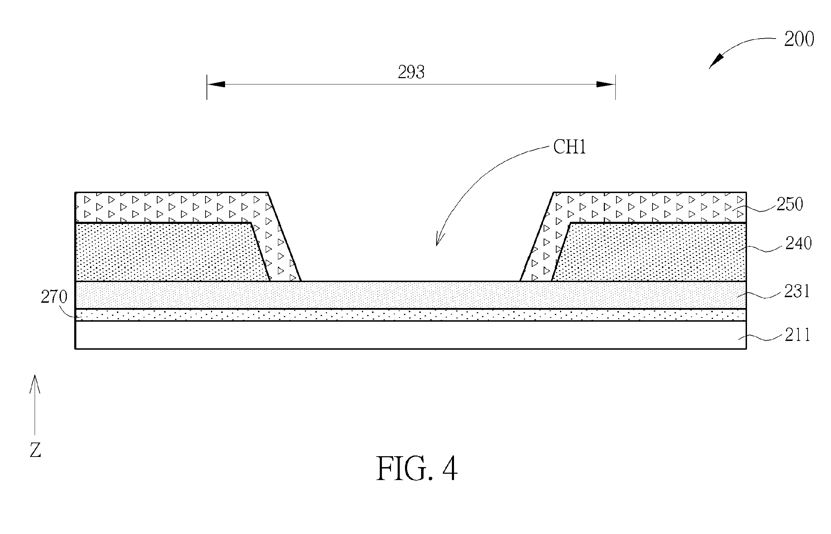

As shown in FIG. 2, FIG. 3 and FIG. 4, a touch panel 200 according to a first preferred embodiment of the present invention is provided. The touch panel 200 has a light transmitting region 291 and a peripheral region 292. The peripheral region 292 is disposed on at least a side of the light transmitting region 291. According to the present embodiment, the peripheral region 292 surrounds the entire periphery of the light transmitting region 291, but is not limited thereto. In another case, the peripheral region 292 may be only disposed adjacent to a portion of the periphery of the light transmitting region 291. The touch panel 200 includes a first substrate 211, a touch-sensing structure 220 and a plurality of first outer traces 231. The first substrate 211 may be a substrate constituted by a soft material and/or a rigid material, such as a glass substrate, a strengthened glass substrate, a plastic substrate, a flexible cover lens, a flexible plastic substrate, for example, a plastic film, a thin glass substrate (as glass film) and/or a substrate of the display. Herein, the above-mentioned strengthened glass substrate may be a cover lens, and the cover lens has a decoration layer (not shown) on at least one side, for example, disposed on a portion of the peripheral area or the entire region of the peripheral area. The above-mentioned substrate of the display may include a color filter substrate of a liquid crystal display and/or a package substrate of an organic light-emitting display. The touch-sensing structure 220 is disposed on the first substrate 211, and the touch-sensing structure 220 includes a plurality of first conductive series 221. The first conductive series 221 and the first outer traces 231 are disposed on the first substrate 211. The first conductive series 221 are at least disposed in the light transmitting region 291 and extend along a first direction X. The first outer trace 231 is disposed in the peripheral region 292. In other words, the first conductive series 221 may be completely disposed in the light transmitting region 291 and/or may extend to the peripheral region 292, if required, but is not limited thereto. The two ends of each of the first outer traces 231 are respectively connected to two ends of one corresponding first conductive series 221. The first outer traces 231, which are connecting to the two ends of each of the first conductive series 221, may further extend to a connection region 293 in the peripheral region 292. Each first outer trace 231 and its corresponding first conductive series 221 may form a closed conductive path on the first substrate 211. In other words, starting from any point in the first outer trace 231 and proceeding along the first outer trace 231 and the corresponding first conductive series 221, the final point will overlap the initial point in the first outer trace 231 subsequently. A structure with this design may be called a "closed conductive path". In addition, this closed conductive path may be only formed by one of the first outer traces 231 and the corresponding first conductive series 221 on the surface of the first substrate 211 without other outer devices such as flexible printed circuit (FPC). According to the present embodiment, the touch panel 200 may further include an insulation layer 240 and a protection layer 250 sequentially stacked on the first substrate 211. The composition of the insulation layer 240 and the protection layer 250 may respectively include inorganic materials, such as silicon nitride, silicon oxide and silicon oxynitride, organic materials, such acrylic resin, and/or other suitable materials. The protection layer 250 is disposed on the first outer traces 231 and includes at least a contact hole CH1. The contact hole CH1 partially exposes the corresponding first outer trace 231. According to the present embodiment, the peripheral region 292 includes a connection region 293 and the contact hole CH1 is disposed in the connection region 293 so as to at least partially expose the first outer traces 231 located in the connection region 293. In other words, each first outer trace 231 is exposed from the protection layer 250 through the contact hole CH1 in the connection region 293. In this configuration, an outer device, such as a flexible printed circuit board (not shown in FIG. 2, FIG. 3 and FIG. 4), may be bonded to each first outer trace 231 in the connection region 293 through a bonding process. Consequently, the first conductive series 221 may be controlled by the outer device through the first outer traces 231. Since each first outer trace 231 and the corresponding first conductive series 221 form a closed conductive path on the first substrate 211 according to the present embodiment, the touch panel 200 may only require one connection region 293 in order to be connected to an outer device (also called single pin design) thereby simplifying the bonding process. In addition, since each first outer trace 231 is connected to the two ends of the corresponding first conductive series 221 along the first direction X, the design of the first outer trace 231 may be regarded as a double routing design, which may solve the problem caused by the first conductive series 221 having a relatively high resistance.

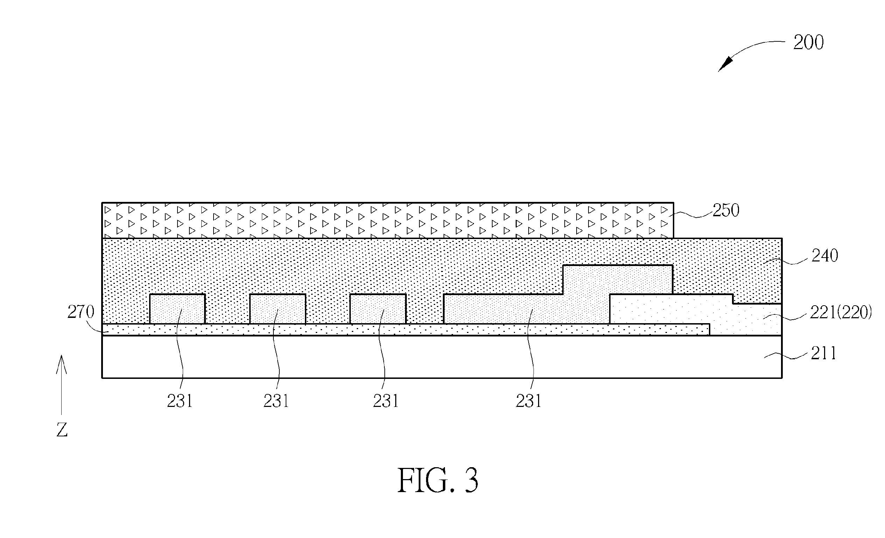

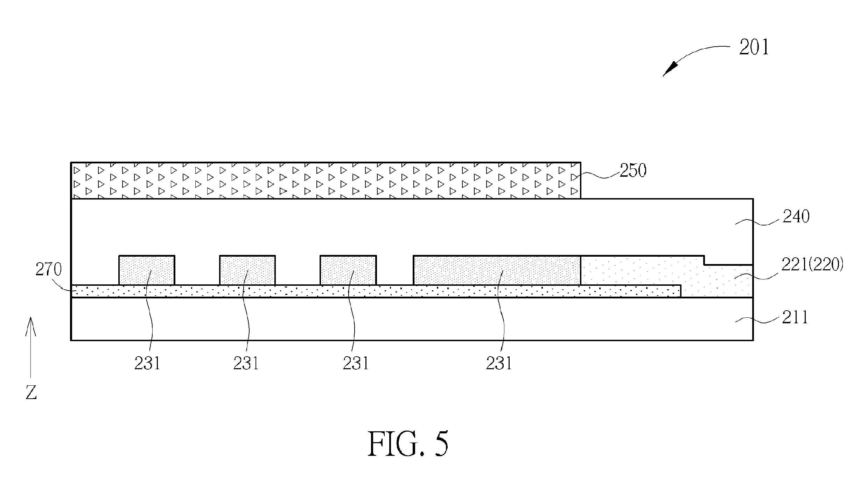

To put it more concretely, the composition of the first conductive series 221 and the first outer traces 231 according to the present embodiment may include indium tin oxide (ITO), indium zinc oxide (IZO) and aluminum zinc oxide (AZO), and/or other suitable non-transparent conductive materials, such as silver, aluminum, copper, magnesium, molybdenum, a composite thereof and/or an alloy thereof. In addition, the touch panel 200 may further include a ground wire 239 disposed on the first substrate 211 to surround the first outer traces 231 and the first conductive series 221. The ground wire 239 is partially disposed in the connection region 293 so as to be electronically connected to the above-mentioned outer device. The ground wire 239 and the outer device in the connection region 293 may form a closed conductive path. As shown in FIG. 3, the first outer trace 231 may partially overlap the corresponding first conductive series 221 along a vertical projection direction Z perpendicular to the first substrate 211 so as to achieve the required physical contact and electrical connection, but is not limited thereto. As shown in FIG. 5, in a touch panel 201 according to another preferred embodiment of the present invention, the first outer trace 231 and its corresponding first conductive series 221 may be formed integrally so as to achieve the required connections. In other words, the first outer traces 231 and the first conductive series 221 can be formed concurrently on the first substrate 211 through patterning a conductive layer. In this way, the corresponding manufacturing process can be further simplified. The composition of the first outer traces 231 and the first conductive series 221 may be the same, but is not limited thereto. In addition, a decoration layer 270 may be further disposed on at least a side of the peripheral region 292, if required, to decorate the periphery of the touch panel 200. The decoration layer 270 may be a single layer or multiple layers of decoration materials stacked with one another. The decoration materials may include color inks, color resists and/or other materials with color and/or texture effects.

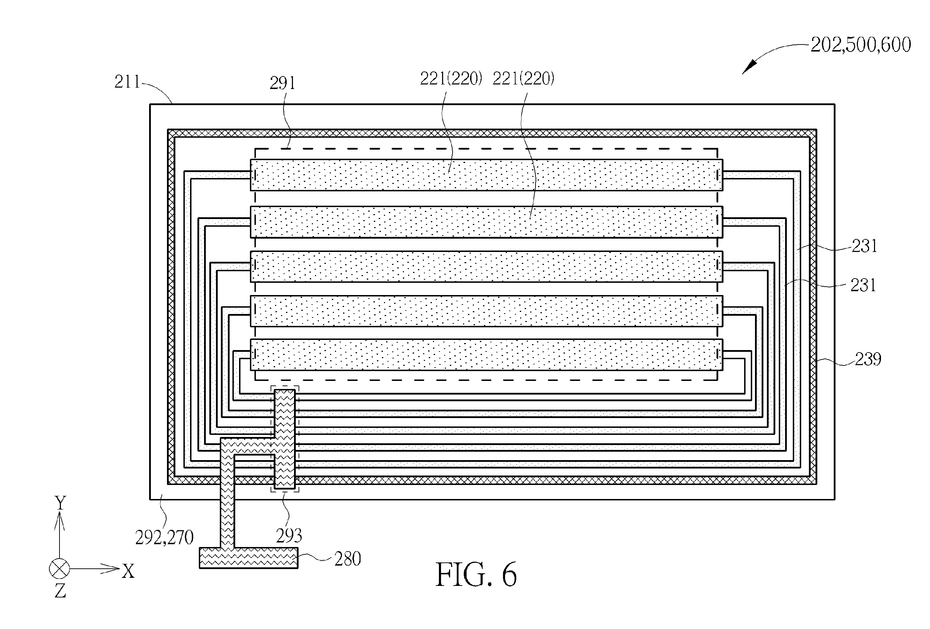

As shown in FIG. 6, according to another preferred embodiment of the present invention, a touch panel 202 may further include an outer device 280 disposed in the peripheral region 292 and at least partially disposed in the connection region 293. The outer device 280 is electronically connected to the first outer traces 231 in the connection region 293 so as to control each first conductive series 221. The outer device 280 may include a flexible printed circuit board (FPC), a driver integrated circuit (driver IC) and/or other suitable outer device. According to the present embodiment, each of the first outer traces 231, the corresponding first conductive series 221 and the outer device 280 located in the connection region 293 may form a closed conductive path on the first substrate 211. In other words, each of the first conductive series 221 and the corresponding first outer trace 231 may form a closed conductive path on the first substrate 211, the ground wire may form another closed conductive path on the first substrate 221, and the outer device 280 is electronically connected to these two closed conductive paths.

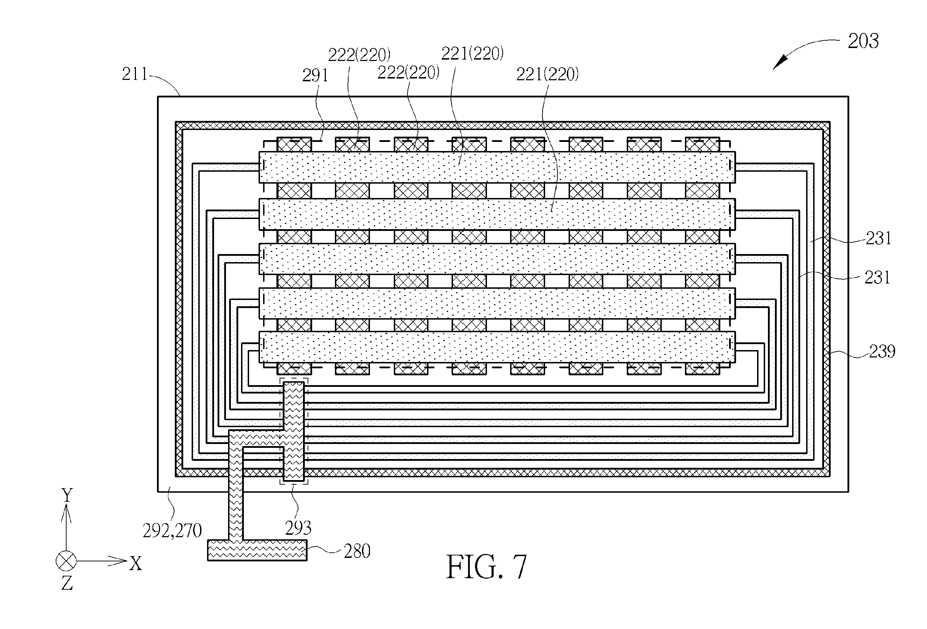

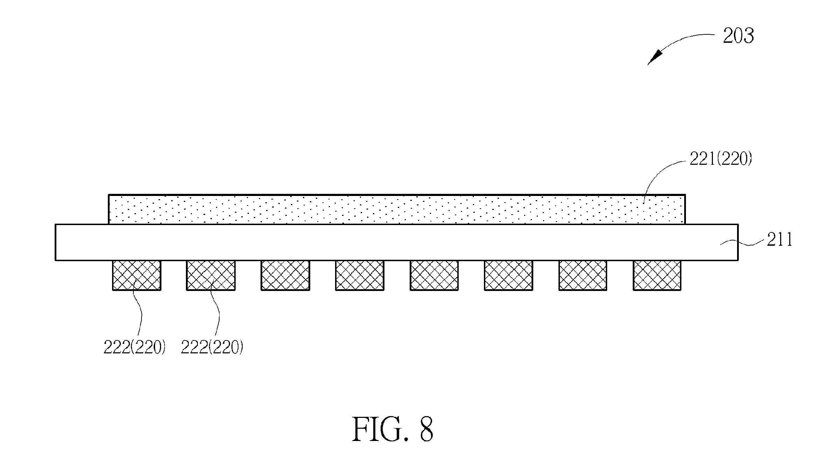

As shown in FIG. 7 and FIG. 8, the touch-sensing structure 220 in a touch panel 203 according to another preferred embodiment of the present invention may further include a plurality of second conductive series 222. The second conductive series 222 are at least disposed in the light transmitting region 291 and extend along a second direction Y. In other words, the second conductive series 222 may be completely disposed in the light transmitting region 291 and/or may partially extend to the peripheral region 292 if required. The first direction X and the second direction Y are crossed with each other, and the first direction X is preferably perpendicular to the second direction Y, but is not limited thereto. According to the present embodiment, each first conductive series 221 and each second conductive series 222 are respectively disposed on different surfaces of the first substrate 211, but is not limited thereto. It is worth noting that each first conductive series 221 and each second conductive series 222 may be a touch signal transmitting electrode and a touch signal receiving electrode respectively so as to transmit and receive the touch sensing signals respectively. In other words, the touch panel 203 may be a mutual capacitive touch panel, but is not limited thereto.

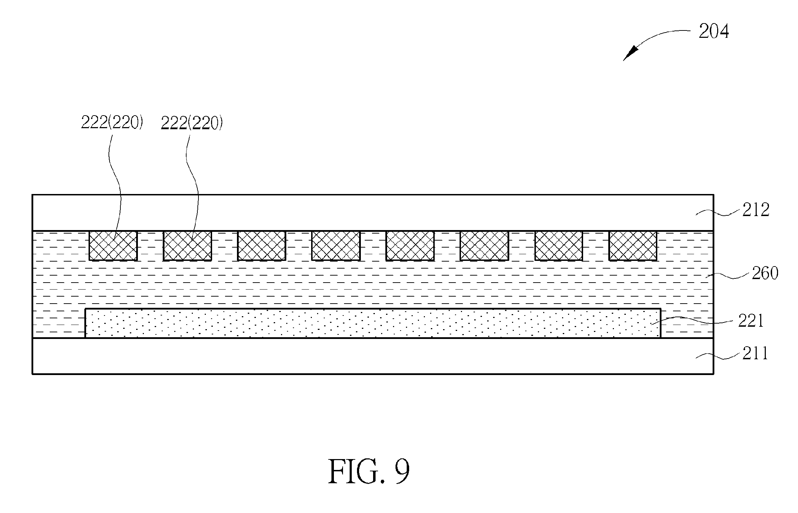

As shown in FIG. 9, a touch panel 204 is provided according to another preferred embodiment of the present invention. The touch panel 204 may further include a second substrate 212 and an adhesive layer 260. The second substrate 212 is opposite to the first substrate 211 and the second conductive series 222 is disposed on the second substrate 212. The adhesive layer 260 is disposed between the first substrate 211 and the second substrate 212 so the first substrate 211 can adhere to the second substrate 212. The second conductive series 222 disclosed in the present embodiment are disposed on the surface of the second substrate 212 facing the first substrate 211, but is not limited thereto. According to other preferred embodiments of the present invention, the second conductive series 222 may also be disposed on the surface of the second substrate 212 opposite to the first substrate 211.

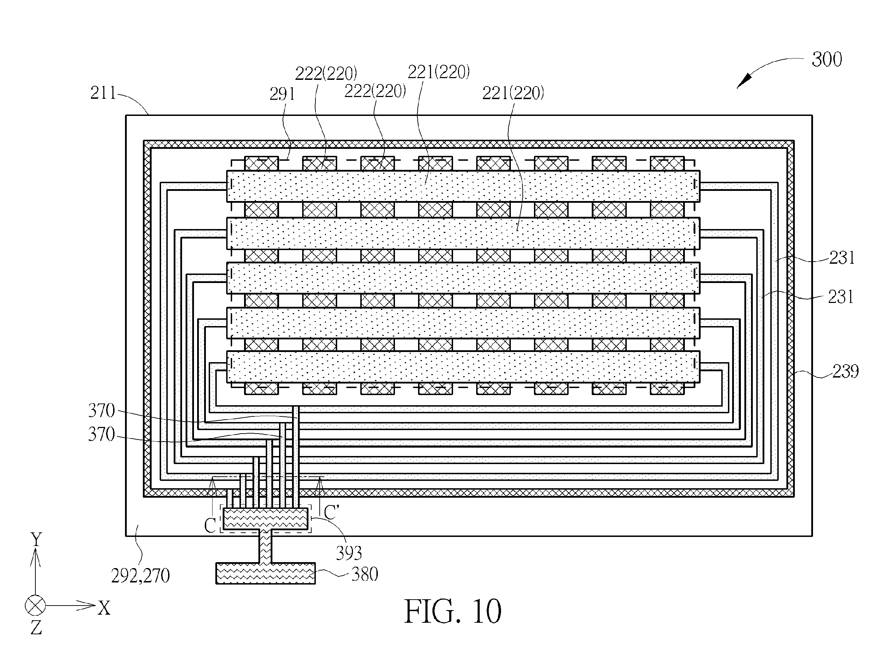

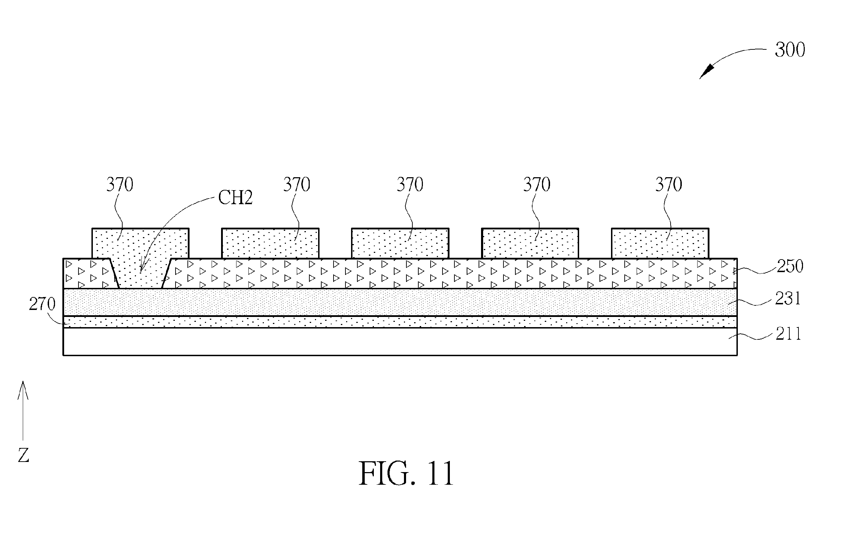

As shown in FIG. 10 and FIG. 11, a touch panel 300 is disclosed according to a second preferred embodiment of the present invention. The difference between the present embodiment and the previous embodiment is that the touch panel 300 further includes a plurality of connection lines 370 and an outer device 380. The connection lines 370 are disposed on the protection layer 250. The protection layer 250 includes at least a contact hole CH2 used to partially expose the corresponding first outer traces 231. One end of each connection line 370 is electronically connected to the corresponding outer trace 231 through the contact hole CH2, and the other end of each connection line 370 extends toward the edge of the touch panel 300. That is to say, the other end of each connection line 370 that is opposite to the end connected to the first outer trace 231 may extend to a connection region 393 in the peripheral region 292. The outer device 380 is at least partially disposed on the connection line 370 and is electronically connected to the first outer traces 231 through the connection lines 370. In this configuration, the outer device 380 can control the first conductive series 221 in the light transmitting region 291 via the connection lines 370 and the first outer traces 231. Since the first outer traces 231 in the present embodiment are not disposed in the connection region 393, if the process for bonding the outer device 380 has failed and a rework process is required to be carried out, the first outer trace 231 will not be harmed by the rework process and the yield can thus be improved. In addition to the connection line 370, the rest of the parts of the touch panel 300 disclosed in this embodiment, such as the positions of other parts and the material properties are similar to those described in the previous first preferred embodiment. For the sake of brevity, these similar configurations and properties will not be described repeatedly.

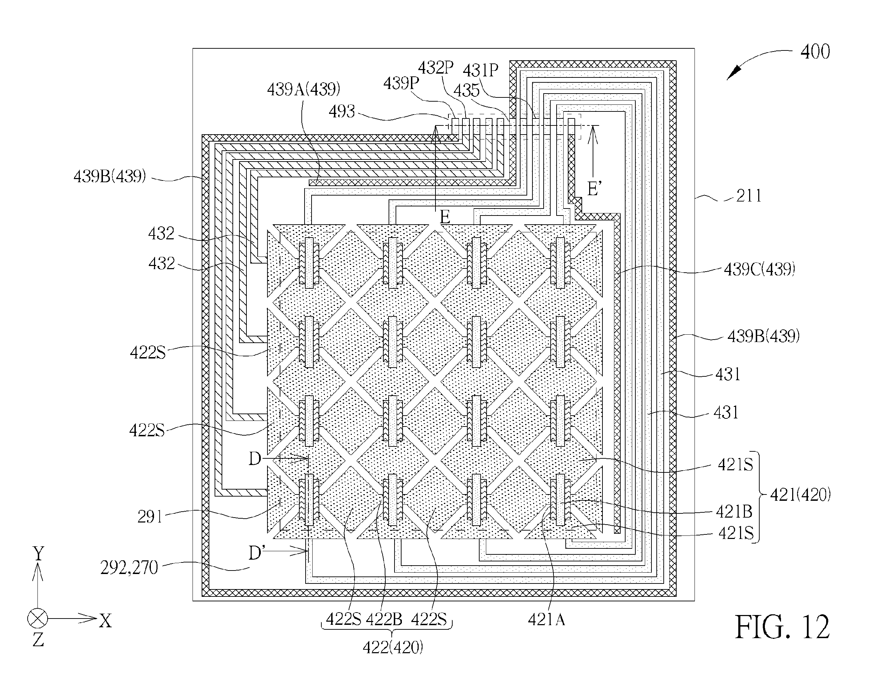

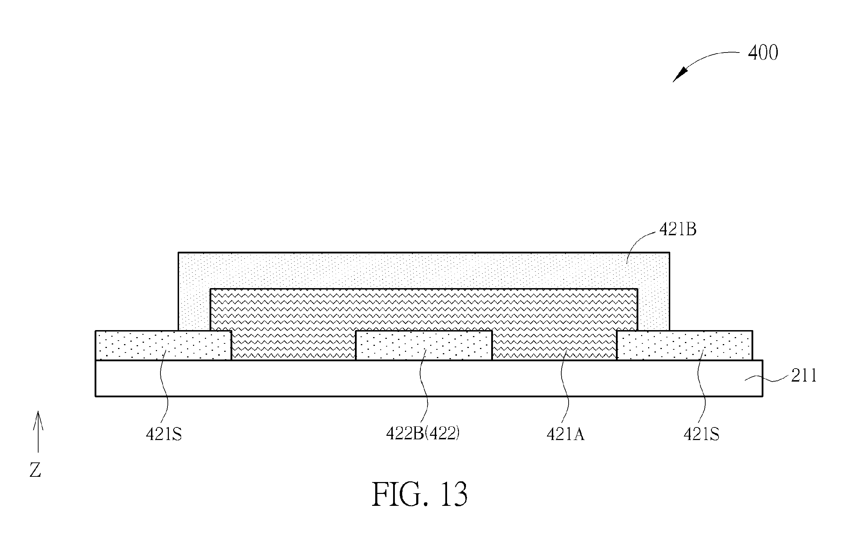

As shown in FIG. 12 to FIG. 14, a touch panel 400 is provided according to a third preferred embodiment of the present invention. The touch panel 400 has a light transmitting region 291 and a peripheral region 292 located on at least a side of the light transmitting region 291. The peripheral region 292 according to the present embodiment surrounds the entire periphery of the light transmitting region 291, but is not limited thereto. The touch panel 400 includes a first substrate 211, a touch-sensing structure 420 and a plurality of first outer traces 431. The touch-sensing structure 420 includes a plurality of first conductive series 421 and a plurality of second conductive series 422. The first conductive series 421, the second conductive series 422 and the first outer traces 431 are disposed on the same surface of the first substrate 211. The first conductive series 421 are at least disposed in the light transmitting region 291 and extend along the first direction X. The second conductive series 422 are at least disposed in the light transmitting region 291 and extend along the second direction Y. The first conductive series 421 and the second conductive series 422 may further extend to the peripheral region 292. The first outer traces 431 are disposed in the peripheral region 292. The two ends of each of the first outer traces 431 are respectively connected to two ends of one corresponding first conductive series 421. Each first outer trace 431 and the corresponding first conductive series 421 may form a closed conductive path on the first substrate 211. Each first conductive series 421 disclosed in the present embodiment includes a plurality of first electrodes 421 S and at least a first connection line 421 B. The first connection line 421 B is used to electronically connect two adjacent first electrodes 421 S. Each second conductive series 422 includes a plurality of second electrodes 422S and at least a second connection line 422B. The second connection line 422B is used to electronically connect two adjacent second electrodes 422S. The touch panel 400 may further include at least one insulating layer 421 A disposed between the first connection line 421 B and the corresponding second connection line 422B so as to electronically insulate the first conductive series 421 from the second conductive series 422. At least one of the first connection line 421 B and the second connection line 422B includes a metal line. In another embodiment of the present invention, the insulating layer 421 A may be a whole layer, and the first conductive series 421 and the second conductive series 422 may be disposed on different surfaces of the insulating layer 421 A.

According to the present embodiment, the touch panel 400 may further include at least a protection layer 250 disposed on the first outer traces 431 and a ground wire 439, and/or the protection layer 250 may be a layer with a complete surface and cover the first substrate 211, the first conductive series 421, the second conductive series 422, the first outer traces 431, a plurality of second outer traces 432 and the ground wire 439. The position, the number of layers and the material of the protection layer 250 are not limited thereto. The protection layer 250 has a plurality of contact holes CH3, which may partially expose the corresponding first outer traces 431 and the ground wire 439. In addition, the peripheral region 292 includes a connection region 493. Each of the first outer traces 431 includes a contact pad 431 P disposed in the connection region 493, and the contact holes CH3 may partially expose the contact pads 431 P. To put it more concretely, the touch panel 400 may further include a plurality of second outer traces 432 and at least one ground wire 439 disposed in the peripheral region 292. One end of each second outer trace 432 is electronically connected to the corresponding second conductive series 422, and the other end of each second outer trace 432 opposite to the end connected to the second conductive series 422 extends to the connection region 493. Each of the second outer traces 432 includes a contact pad 432P disposed in the connection region 493. At least a portion of the contact holes CH3 partially expose the contact pads 432P. The ground wire 439 is disposed on the first substrate 211 and surrounds each first outer trace 431, each second outer trace 432, each first conductive series 421 and each second conductive series 422. Additionally, the ground wire 439 is at least partially disposed between the first outer traces 431 and the second outer traces 432, at least partially disposed between the first outer traces 431 and the first conductive series 421, at least partially disposed between the first outer traces 431 and the second conductive series 422, at least partially disposed between the second outer traces 432 and the first conductive series 421 and at least partially disposed between the second outer traces 432 and the second conductive series 422 so as to improve signal interference problems between different axis electrodes and different outer traces. More specifically, the ground wire 439 is disposed in the peripheral region 292 and at least partially disposed in the connection region 493. The ground wire 439 may preferably include a first ground wire 439A, a second ground wire 439B and a third ground wire 439C. The first ground wire 439A is at least partially between the first outer traces 431 and the second outer traces 432. The second ground wire 439B is disposed on the first substrate 211 and surrounds the first conductive series 421, the first outer traces 431, the second conductive series 422 and the second outer traces 432. The third ground wire 439C is disposed between the first outer traces 431 and the second conductive series 422. The first ground wire 439A, the second ground wire 439B and the third ground wire 439C may respectively include one contact pad 439P disposed in the connection region 493, and the contact hole CH3 exposes the contact pads 439P. The first ground wire 439A and the second ground wire 439B form a closed conductive path on the first substrate 221. Additionally, the first ground wire 439A may have at least one interrupted section 435 in the connection region 493. The contact pad 439P is connected to two ends of the interrupted section 435 of the first ground wire 439A so as to electronically connect the two ends of the interrupted section 435 of the first ground wire 439A via the contact pad 439P. It is worth noting that a length of the interrupted section 435 of the first ground wire 439A is shorter than or equal to 5 millimeters (mm), and the length of the interrupted section 435 is preferably between 0.01 mm and 0.5mm, but is not limited thereto. In addition, a decoration layer 270 may be further disposed on at least a side of the peripheral region 292, if required, to decorate the periphery of the touch panel 400.

Additionally, the composition of the first outer traces 431, the second outer traces 432, the first connection line 421 B, the second connection line 422B, the first electrodes 421 S and the second electrodes 422S according to the present embodiment may include indium tin oxide (ITO), indium zinc oxide (IZO) and aluminum zinc oxide (AZO), metal materials, and/or other suitable conductive materials. The metal materials mentioned above may include silver (Ag), aluminum (Al), copper (Cu), magnesium (Mg), molybdenum (Mo), titanium (Ti), chromium (Cr), a composite thereof, a stack structure thereof (such as ITO/Ag/ITO or Mo/Al/Mo) and/or an alloy thereof, but is not limited thereto. The structure of the materials mentioned above may be a mesh, such as a metal mesh. The conductive materials mentioned above may include conductive particles, carbon nanotubes (CNTs) and/or nano silver, but is not limited thereto. The structure of the conductive materials may also be a mesh, such as a conductive mesh.

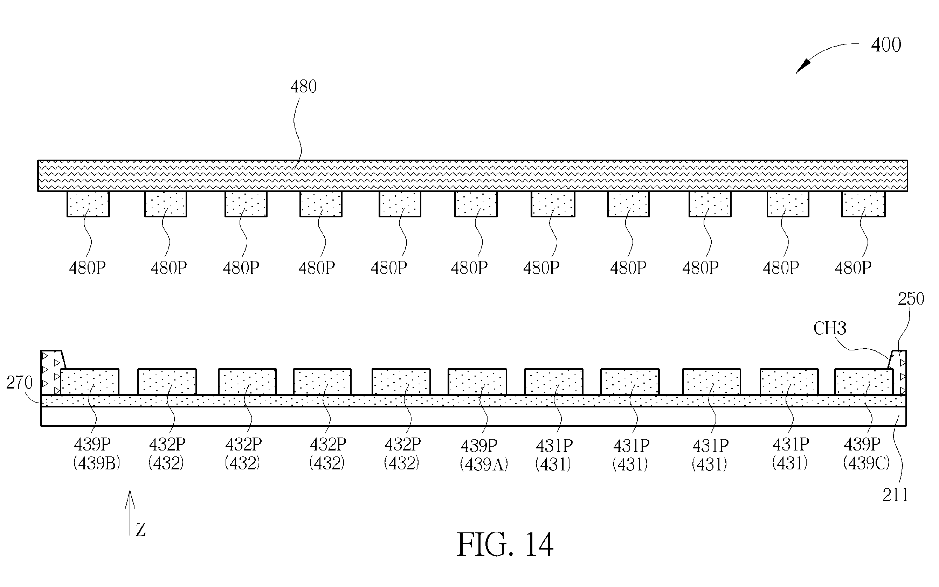

As shown in FIG. 12 and FIG. 14, the touch panel 400 may further include an outer device 480. The outer device 480 includes a plurality of bonding pads 480P which can be disposed correspondingly to the contact pads 431 P, the contact pads 432P and/or the contact pad 439P. The outer device 480 may be electronically connected to the contact pads 431 P, the contact pads 432P and the contact pads 439P in the connection region 493 through a conductive adhesive material (not shown), such as an anisotropic conductive film (ACF). In other words, the outer device 480 is electronically connected to the first outer traces 431 and the second outer traces 432 through the contact holes CH3. Therefore, the first conductive series 421 and the second conductive series 422 in the light transmitting region 491 can be controlled by the outer device 480. In addition to the structure of the first conductive series 421 and the position of each second conductive series 422, the rest of the parts of the touch panel 400 disclosed in this embodiment, such as the positions of other parts and the material properties are similar to those described in the previous first preferred embodiment. For the sake of brevity, these similar configurations and properties are therefore not disclosed in detail. It is worth noting that, the outer device 480 in this embodiment may be electronically connected to the ground wire 439 via the contact hole CH3. The outer device 480 may be electronically connected to the contact pads 439P. The first ground wire 439A, the second ground wire 439B and the outer device 480 in the connection region 493 may form a closed conductive path on the first substrate 211. In other words, the outer device 480 may be electronically connected to the first ground wire 439A, the second ground wire 439B and the third ground wire 439C via the contact pads 439P. More specifically, the outer device 480 may be electronically connected to two ends of the interrupted section 435 of the first ground wire 439A so as to electronically connect the two ends of the interrupted section 435 of the first ground wire 439A via the outer device 480.

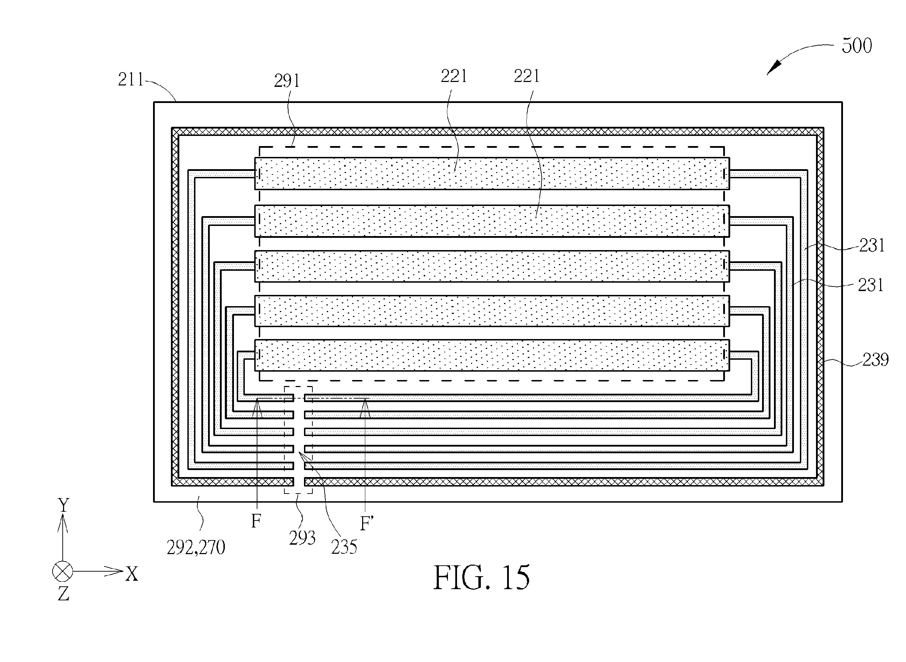

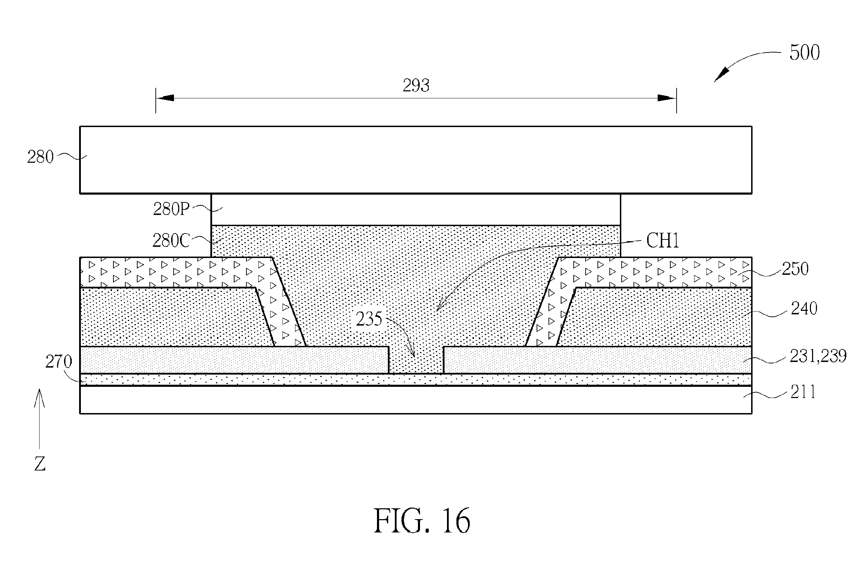

As shown in FIG. 6, FIG. 15 and FIG.16, a touch panel 500 is disclosed according to a fourth preferred embodiment of the present invention. The difference between the present embodiment and the previous first embodiment is that each of the first outer traces 231 and the ground wire 239 in the touch panel 500 may further include an interrupted section 235 disposed in the connection region 293 respectively. A contact hole CH1 in the protection layer 250 can partially expose the corresponding first outer traces 231 and the ground wire 239, and the interrupted section 235 of each first outer trace 231 is disposed correspondingly to the contact hole CH1. In other words, two ends of the interrupted section 235 of each first outer trace 231 are exposed by the contact hole CH1 so that the outer device 280 may be electronically connected to the first conductive series 221 via the exposed first outer traces 231 in the connection region 293. Therefore, each first outer trace 231, the corresponding first conductive series 221 and the outer device 280 can form a closed conductive path on the first substrate 211. That is to say, the first outer traces 231 respectively connected to the two ends of each of the first conductive series 221 include interrupted sections 235 in the connection region 293. The outer device 280 includes a plurality of bonding pads 280P electronically connected to two ends of the interrupted section 235 of each first outer trace 231 in the connection region 293 through a conductive material 280C, such as an anisotropic conductive film (ACF) so as to form a closed conductive path. The outer device 280 may include a flexible printed circuit. By using the interrupted section 235, the touch panel 500 disclosed in the present embodiment can keep the advantage of the single pin design and the control over the signals can be improved. In addition to the interrupted section 235, the rest of the parts of the touch panel 500 disclosed in this embodiment, such as the positions of other parts and the material properties are similar to those described in the previous first preferred embodiment. For the sake of brevity, these similar configurations and properties are therefore not disclosed in detail. It is worth noting that the length of each interrupted section 235 is shorter than or equal to 5 mm, and it preferably ranges from 0.01 mm to 0.5 mm. This configuration can provide a single pin design without increasing the size of the outer device 280. In addition, the outer traces and the ground wires in the touch panels of other embodiments described above may also selectively include the interrupted section in this embodiment so as to achieve the purpose of improving signal control. In other words, the structure of the interrupted section 435 (as shown in FIG. 12) is similar to the structure of the interrupted section 235.

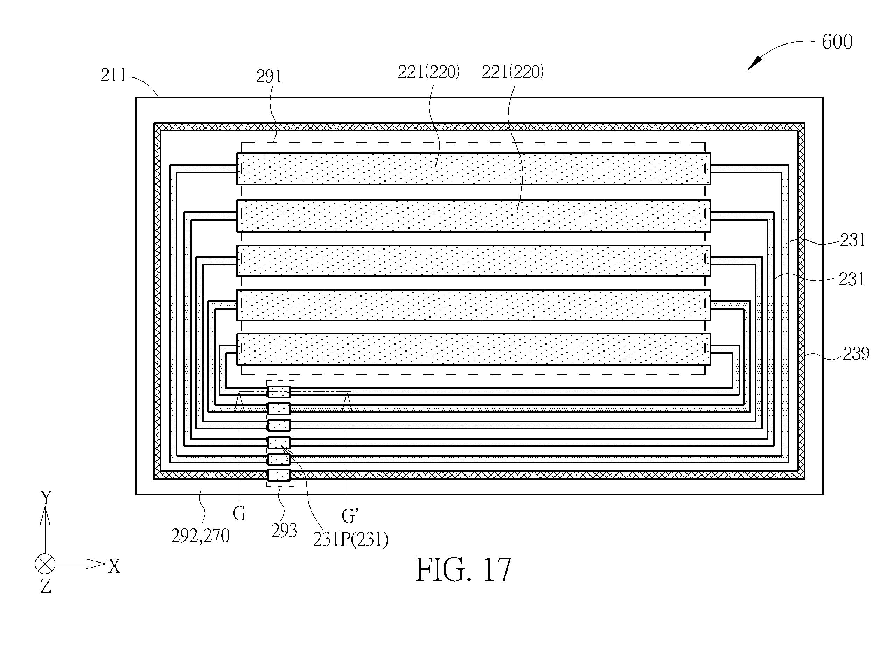

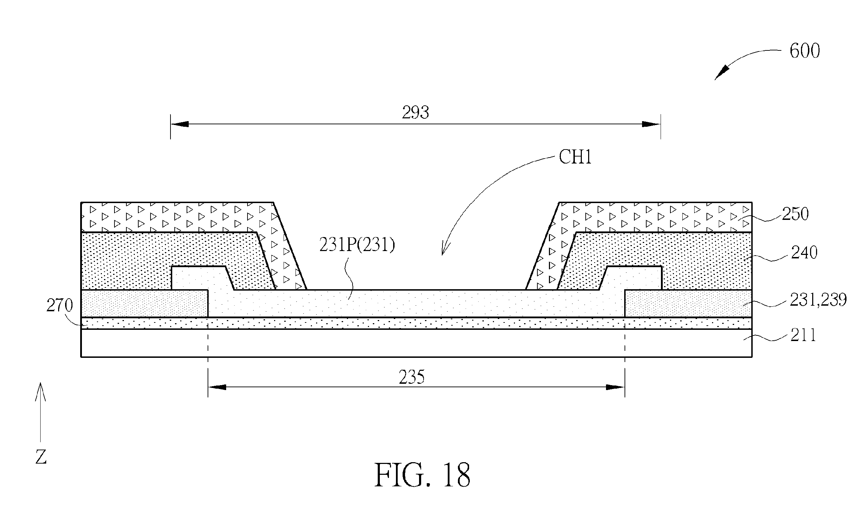

As shown in FIG. 6, FIG. 17 and FIG. 18, a touch panel 600 is provided according to a fifth preferred embodiment of the present invention. The difference between the present embodiment and the previous fourth embodiment is that each of the first outer traces 231 and the ground wire 239 in the touch panel 600 may further include a contact pad 231 P disposed in the connection region 293 respectively. Each contact pad 231 P is electronically connected to two ends of the interrupted section 235 of each first outer trace 231 and/or the ground wire 239 respectively so as to have each first outer trace 231 and the corresponding first conductive series 221 form a closed conductive path on the first substrate 211, and to have the ground wire 239 form another closed conductive path on the first substrate 221. Besides, the process sequence of the contact pads 231 P, the outer traces 231 and the grounding line 239 are not limited. The contact hole CH1 of the protection layer 250 may partially expose the corresponding contact pad 231 P. In this way, the outer device 280 may be electronically connected to the exposed contact pads 231 P in the connection region 293 and may be electronically connected to the first outer traces 231 and the first conductive series 221 through contact pads 231 P. In addition to the contact pads 231 P, the rest of the parts of the touch panel 600 disclosed in this embodiment, such as the positions of other parts and the material properties are similar to those described in the previous first preferred embodiment. For the sake of brevity, these similar configurations and properties are therefore not disclosed in detail. It is worth noting that the composition of the contact pads 231 P may be transparent conductive material or metal conductive material so as to have each first outer trace 231 and the corresponding first conductive series 221 forming the closed conductive path on the first substrate 211. The outer device 280 may further be electronically connected to each contact pad 231 P, but is not limited thereto. That is to say, the closed conductive path, formed by each first outer trace 231 and the corresponding first conductive series 221, can be of any type so as to simplify the bonding process and lower the manufacturing costs. In addition, the interrupted section 235 and the contact pads 231 P in this embodiment may be selectively applied to the touch panels of other embodiments described above so as to generate required improvement effects.

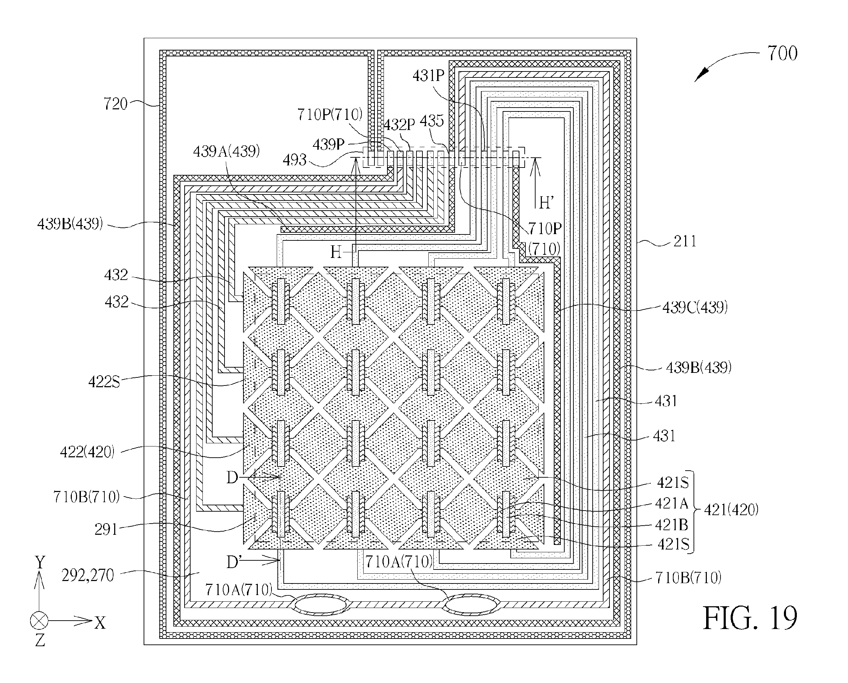

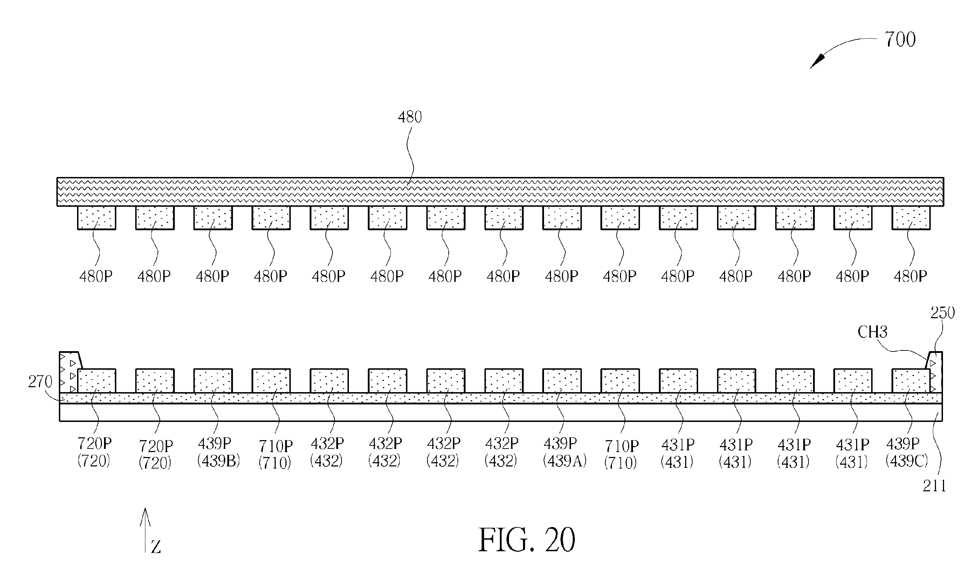

As shown in FIG 19 and 20, a touch panel 700 is disclosed according to a sixth preferred embodiment of the present invention. The difference between the present embodiment and the previous third embodiment is that the touch panel 700 further includes a sensing unit 710 disposed in the peripheral region 292. The sensing unit 710 preferably includes at least one sensing component 710A and one sensing trace 710B electronically connected to the sensing component 710A. The sensing trace 710B extends to the connection region 493, and the outer device 480 is electronically connected to the sensing trace 710B in the connection region 493 so as to be further electronically connected to the sensing component 710A. More specifically, the sensing unit 710 may also include a contact pad 710P disposed in the connection region 493, and the outer device 480 may be electronically connected to the sensing trace 710B via the contact pad 710P exposed by the contact hole CH3. The sensing component 710A in this embodiment may preferably include a proximity sensor wire, a near field communication (NFC) component and/or other appropriate sensing components disposed in the peripheral region 292. Additionally, the third ground wire 439C is preferably disposed between the sensing trace 710B and the second conductive series 422, and disposed between the sensing trace 710B and the first conductive series 421 so as to keep the signals of the sensing unit 710 from being interfered with by the signals from the first conductive series 421 and the second conductive series 422.

In addition, an antenna structure 720 may be selectively disposed outside the second ground wire 439B. The second ground wire 439B may be disposed between the antenna structure 720 and the first outer traces 431, and the second ground wire 439B may also be disposed between the antenna structure 720 and the sensing trace 710B. High frequency signals generated by the antenna structure 720 may be kept from interfering with the first outer trace 431 and the sensing trace 710B. The antenna structure 720 may also include a contact pad 720P disposed in the connection region 493, and the outer device 480 may be electronically connected to the antenna structure 720 via the contact pad 720P exposed by the contact hole CH3.

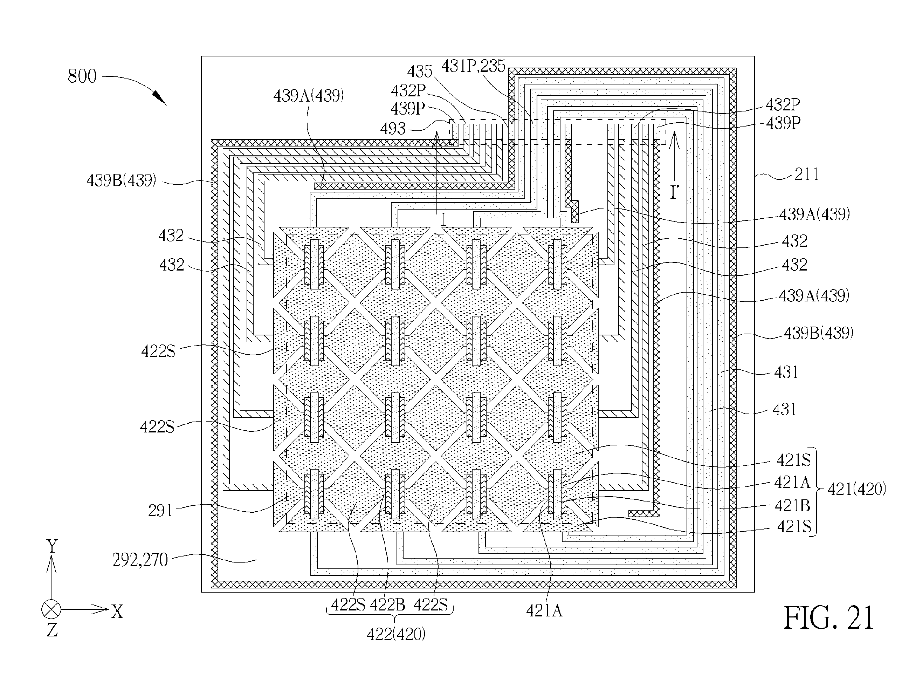

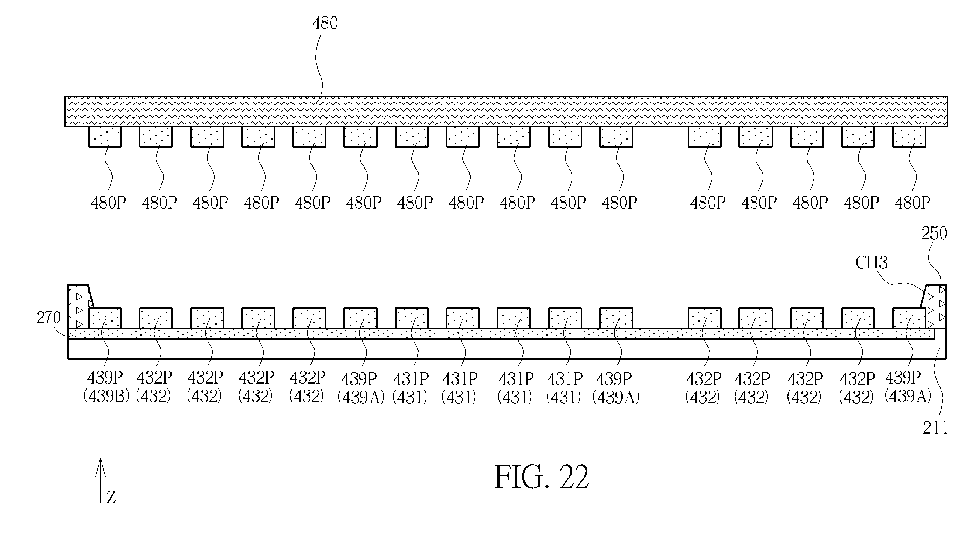

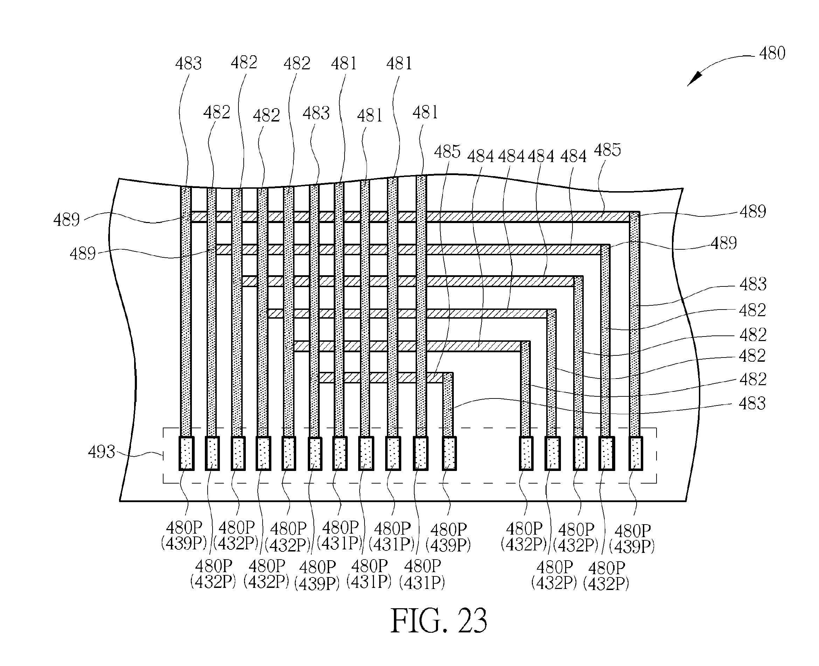

As shown in FIG 21, FIG. 22 and FIG. 23, a touch panel 800 is disclosed according to a seventh preferred embodiment of the present invention. The difference between the present embodiment and the previous third embodiment is that, in the touch panel 800, two ends of each second conductive series 422 are connected to different second outer traces 432, and each of the second outer traces 432 extends to the connection region 493. Because two of the second outer traces 432 are connected to two ends of one corresponding second conductive series 422 along the second direction Y respectively, the design of the second outer traces 432 may also be regarded as a double routing design for improving related issues generated by high resistance of the second conductive series 422. In this embodiment, the outer device 480 is electronically connected to the first outer traces 431 and the second outer traces 432 respectively. Each first outer trace 431, the corresponding first conductive series 421 and the outer device 480 in the connection region 493 form a first closed conductive path on the first substrate 211. The two second outer traces 432 connected to one identical second conductive series 422 are electronically connected to the outer device 480 in the connection region 493. Each second conductive series 422 and the two second outer traces 432 connected with the second conductive series 422 form a second closed conductive path in the outer device 480.

Similar to other preferred embodiments described above, each of the first conductive series 421 in this embodiment and the corresponding first outer trace 431 may directly form a first closed conductive path on the first substrate 211, and the outer device 480 may be electronically connected to the first closed conductive path, but is not limited thereto. For example, each of the first outer traces 431 may also have an interrupted section 235 in the connection region 493, and the outer device 480 may be electronically connected to two ends of each interrupted section 235 of the first outer trace 431 in the connection region 493 so as to form the first closed conductive path described above. The length of each interrupted section 235 of the first outer trace 431 is preferably shorter than or equal to 5 mm, but is not limited thereto. Additionally, each of the first outer traces 431 may also include a contact pad 431 P disposed in the connection region 493. Each of the contact pads 431 P is connected to two ends of each interrupted section 235 of the first outer trace 431 so as to form a closed conductive path on the first substrate 211 by each first outer trace 431 and the corresponding first conductive series 421, and the outer device 480 is electronically connected to each of the contact pads 431 P.

Similar to the third preferred embodiment described above, the touch panel 800 in this embodiment may further include the first ground wire 439A and the second ground wire 439B. The first ground wire 439A and the second ground wire 439B are disposed on the first substrate 211. The first ground wire 439A is at least partially disposed between the first outer traces 431 and the second outer traces 432, and the second ground wire 439B surrounds the first conductive series 421, the first outer traces 431, the second conductive series 422 and the second outer traces 432. The first ground wire 439A and the second ground wire 439B extend to the connection region 493, and the first ground wire 439A has at least one interrupted section 435 in the connection region 493. The outer device 480 may be electronically connected to two ends of the interrupted section 435 of the first ground wire 439A in the connection region 493 so as to electronically connect the two ends of the interrupted section 435 of the first ground wire 439A via the outer device 480. In addition, the first ground wire 439A and the second ground wire 439B may also include a contact pad 439P disposed in the connection region 493 respectively, and the contact hole CH3 exposes the contact pads 439P. The contact pad 439P may be connected to two ends of the interrupted section 435 of the first ground wire 439A so as to electronically connect the two ends of the interrupted section 435 of the first ground wire 439A via the contact pad 439P, and the outer device 480 may be electronically connected to the contact pads 439P.

As shown in FIGs. 21-23, the outer device 480 may be electronically connected to the first outer traces 431, the second outer traces 432, the first ground wire 439A and the second ground wire 439B via the contact hole CH3. More specifically, the outer device 480 in this embodiment is preferably a flexible printed circuit having a multiple-layered circuit structure. The outer device 480 in this embodiment may include a plurality of first upper layer traces 481, a plurality of second upper layer traces 482, a plurality of third upper layer traces 483, a plurality of first lower layer traces 484 and a plurality of second lower layer traces 485. Each of the first upper layer traces 481 is electronically connected to one corresponding first outer trace 431 via the bonding pad 480P and the contact pad 431 P. Each of the second upper layer traces 482 is electronically connected to one corresponding second outer trace 432 via the bonding pad 480P and the contact pad 432P. Each of the third upper layer traces 483 is electronically connected to one corresponding first ground wire 439A or one corresponding second ground wire 439B via the bonding pad 480P and the contact pads 439P. Each of the first lower layer traces 484 is electronically connected to two of the second upper layer traces 482 via connection through holes 489. Each of the second lower layer traces 485 is electronically connected to two of the third upper layer traces 483 via the connection through holes 489. The first lower layer traces 484 and the second lower layer traces 485 are electronically insulated from the first upper layer traces 481. Each second conductive series 422, the two second outer traces 432 connected with the second conductive series 422, two of the second upper layer traces 482 and one of the first lower layer traces 484 form the second closed conductive path. Additionally, the first ground wire 439A, the third upper layer traces 483 and the second lower layer trace 485 in the outer device 480 may form a closed conductive path. The second ground wire 439B, the third upper layer traces 483 and the second lower layer trace 485 in the outer device 480 may form another closed conductive path. According to the circuit design described above, the first conductive series 421 and the second conductive series 422 in the touch panel 800 of this embodiment may both be applied with the double routing driving design and the single pin design so as to simplify the related bonding process and lower the manufacturing costs.

The present invention provides a touch panel with a double routing driving design. Each outer trace and each corresponding electrode can form a closed conductive path so that a single pin design can be adopted in the touch panel with a double routing design, which further simplifies the complexity of the corresponding bonding process and lowers the manufacturing costs. Additionally, the ground wires are disposed between the outer traces for improving signal interference issue between different outer traces.

## Claims

1. A touch panel (400, 700, 800), having a peripheral region (292), the touch panel (400, 700, 800) **characterized by** comprising:
a first substrate (211);
a touch-sensing structure (420), disposed on the first substrate (211);
a plurality of first outer traces (431), disposed at least in part in the peripheral
region (292), wherein the first outer traces (431) are electronically connected to the touch-sensing structure (420) and each of the first outer traces (431) extends to a connection region (493) in the peripheral region (292);
a first ground wire (439A), disposed at least in part on the first substrate (211),
wherein the first ground wire (439A) extends to the connection region (493), and the first ground wire (439A) has at least one interrupted section (435) in the connection region (493); and
an outer device (480) electronically connected to the first ground wire (439A) and
the first outer traces (431) in the connection region (493), wherein the outer device (480) electronically connects two ends of the interrupted section (435) of the first ground wire (439A) in the connection region (493), and the two ends of the interrupted section (435) of the first ground wire (439A) are electronically connected via the outer device (480).

2. The touch panel (400, 700, 800) of claim 1, further **characterized in that** the touch-sensing structure (420) comprises a plurality of first conductive series (421), disposed at least in part on the first substrate (211) and extending along a first direction (X), wherein each of the first outer traces (431) is electronically connected to one of the first conductive series (421).

3. The touch panel (400, 700, 800) of claim 2, further **characterized in that** the touch-sensing structure (420) further comprises:
a plurality of second conductive series (422) disposed at least in part on the first
substrate (211) and extending along a second direction (Y), wherein the second direction (Y) and the first direction (X) cross each other; and
a plurality of second outer traces (432) disposed at least in part in the peripheral
region (292), wherein each of the second outer traces (432) is electronically connected to one of the second conductive series (422), and each of the second outer traces (432) extends to the connection region (493) in the peripheral region (292).

4. The touch panel (400, 700) of claim 3, further **characterized by** another ground wire (439C), disposed between the first outer traces (431) and the second conductive series (422), wherein the outer device (480) is electronically connected to the other ground wire (439C) in the connection region (493).

5. The touch panel (400, 700, 800) of claim 1, further **characterized in that** the first ground wire (439A) comprises a contact pad (439P) disposed in the connection region (493), the contact pad (439P) is connected to two ends of the interrupted section (435) of the first ground wire (439A) so as to electronically connect the two ends of the interrupted section (435) of the first ground wire (439A) via the contact pad (439P), and the outer device (480) is electronically connected to the contact pad (439P).

6. The touch panel (400, 700, 800) of claim 1, **characterized in that** two ends of each first outer trace (431) are connected to two ends of one corresponding first conductive series (421) respectively, the first outer traces (431) connected to the two ends of each first conductive series (421) extend to the connection region (493), and the outer device (480) is electronically connected to the first outer traces (431), wherein each of the first outer traces (431), the corresponding first conductive series (421) and the outer device (480) in the connection region (493) form a closed conductive path on the first substrate (211).

7. A touch panel (800), having a peripheral region (292), the touch panel (400, 700, 800) **characterized by** comprising:
a first substrate (211);
a plurality of first conductive series (421), disposed at least in part on the first
substrate (211) and extending along a first direction (X);
a plurality of first outer traces (431), disposed at least in part in the peripheral
region (292), wherein two ends of each first outer trace (431) are connected to two ends of one corresponding first conductive series (421) respectively, and the first outer traces (431) extend to a connection region (493) in the peripheral region (292);
a plurality of second conductive series (422), disposed at least in part on the first
substrate (211) and extending along a second direction (Y), wherein the first direction (X) and the second direction (Y) cross each other;
a plurality of second outer traces (432), disposed at least in part in the peripheral
region (292), wherein two ends of each second conductive series (422) are respectively connected to two of the second outer traces (432) extending to the connection region (493); and
an outer device (480) electronically connected to the first outer traces (431) and
the second outer traces (432) respectively, wherein each first outer trace (431), one corresponding first conductive series (421) and the outer device (480) in the connection region (493) form a first closed conductive path on the first substrate (211), and two second outer traces (432) connected to one identical second conductive series (422) are electronically connected to the outer device (480) in the connection region (493), wherein each second conductive series (422) and the two corresponding second outer traces (432) form a second closed conductive path in the outer device (480).

8. The touch panel (400, 700, 800) of claim 1 or the touch panel (800) of claim 7, further **characterized by** a decoration layer (270), disposed on at least one side of the peripheral region (292).

9. The touch panel (400, 700, 800) of claim 3 or the touch panel (800) of claim 7, further **characterized by** a second ground wire (439B) disposed on the first substrate (211), wherein the second ground wire (439B) surrounds the first conductive series (421), the first outer traces (431), the second conductive series (422) and the second outer traces (432).

10. The touch panel (400, 700, 800) of claim 3 or the touch panel (800) of claim 7, further **characterized by** an insulating layer (421 A), wherein the first conductive series (421) and the second conductive series (422) are disposed on an identical surface of the first substrate (211), each of the first conductive series (421) comprises a plurality of first electrodes (421S) and at least one first connection line (421 B), and the first connection line (421 B) is used to electronically connect two adjacent first electrodes (421 S), wherein each of the second conductive series (422) comprises a plurality of second electrodes (422S) and at least one second connection line (422B), the second connection line (422B) is used to electronically connect two adjacent second electrodes (422S), and the insulating layer (421A) is at least disposed between the first connection line (421 B) and corresponding second connection line (422B) so as to electronically insulate the first conductive series (421) from the second conductive series (422).

11. The touch panel (800) of claim 7, further **characterized by** a first ground wire (439A) disposed on the first substrate (211).

12. The touch panel (400, 700, 800) of claim 1 or the touch panel (800) of claim 11, further **characterized in that** the first ground wire (439A) is disposed between the first outer traces (431) and the second outer traces (432).

13. The touch panel (800) of claim 7, further **characterized in that** the outer device (480) comprises:
a plurality of first upper layer traces (481), wherein each of the first upper layer traces (481) is electronically connected to one of the first outer traces (431);
a plurality of second upper layer traces (482), wherein each of the second upper layer traces (482) is electrically connected to one of the second outer traces (432); and
a plurality of first lower layer traces (484), wherein each of the first lower layer traces (484) is electrically connected to two of the second upper layer traces (482), and the first lower layer traces (484) are electrically insulated from the first upper layer traces (481), wherein each second conductive series (422), the two second outer traces (432) connected with the second conductive series (422), two of the second upper layer traces (482) and one of the first lower layer traces (484) form the second closed conductive path.

14. The touch panel (800) of claim 7, further **characterized in that** each first conductive series (421) and one corresponding first outer trace (431) form the first closed conductive path on the first substrate (211), and the outer device (480) is electrically connected to the first closed conductive path.

15. The touch panel (800) of claim 7, further **characterized in that** each of the first outer traces (431) has an interrupted section (235) in the connection region (493), and the outer device (480) is electronically connected to two ends of each interrupted section (235) of the first outer trace (431) in the connection region (493) so as to form the first closed conductive path.

16. The touch panel (400, 700, 800) of claim 1 or the touch panel (800) of claim 15, further **characterized in that** the outer device (480) has a plurality of bonding pads (480P), and each of the boding pads (480P) is electronically connected to corresponding two ends of the interrupted section (435) of the first ground wire (439A) or corresponding two ends of the interrupted section (235) of the first outer trace (431) in the connection region so as to form the closed conductive path.

17. The touch panel (400, 700, 800) of claim 1 or the touch panel (800) of claim 15, further **characterized in that** a length of the interrupted section (435) of the first ground wire (439A) or a length of each interrupted section (235) of the first outer trace (431) is shorter than or equal to 5 millimeters.

18. The touch panel (800) of claim 15, further **characterized in that** each of the first outer traces (431) comprises a contact pad (431 P) disposed in the connection region (493), each of the contact pads (431 P) is connected to two ends of each interrupted section (235) of the first outer trace (431) so as to form a closed conductive path on the first substrate (211) by each first outer trace (431) and the corresponding first conductive series (421), and the outer device (480) is electronically connected to each of the contact pads (431 P).
